# EUROPÄISCHE PATENTSCHRIFT

(11) **EP 4 051 567 B1**
(45) Veröffentlichungstag und Bekanntmachung des Hinweises auf die Patenterteilung: **22.10.2025**
(21) Anmeldenummer: 20811534.5
(22) Anmeldetag: 02.11.2020
(51) Int. Cl.: B63B 1/24, B63B 1/30, B63B 32/10, B63B 32/60, B63H 11/08, B63H 11/10, B63H 21/17, G05D 109/30

(54) **WASSERSPORTGERÄT, INSBESONDERE FOILBOARD**
WATER SPORTS EQUIPMENT, IN PARTICULAR HYDROFOIL BOARD
ÉQUIPEMENT POUR SPORTS NAUTIQUES, EN PARTICULIER PLANCHE DE FOIL

(30) Priorität: 01.11.2019 DE 102019129574
(43) Veröffentlichungstag der Anmeldung: 07.09.2022
(73) Patentinhaber: Rosenxt Holding AG, 6370 Stans (CH)
(72) Erfinder: ROSEN, Hermann, 6047 Kastanienbaum (Horw LO) (CH)
(74) Vertreter: Wischmeyer, André
(86) Internationale Anmeldenummer: PCT/EP2020/080702
(87) Internationale Veröffentlichungsnummer: WO 2021/084132

(56) Entgegenhaltungen:
- EP-A1- 3 214 521
- WO-A1-2016/130022
- WO-A1-2018/147386
- CN-U- 208 760 860
- US-A1- 2014 134 900
- US-B1- 6 178 905
- ANONYMOUS: "New foil board option | Kitesurfing Forums, page 1 - Seabreeze", 4 December 2016 (2016-12-04), XP055923389, Retrieved from the Internet <URL:https://www.seabreeze.com.au/forums/Kitesurfing/General/New-foil-board-option?page=1> [retrieved on 20220520]
- OTONAUTIKA, no. 093170187, 10 April 2013 (2013-04-10), XP093170187, Retrieved from the Internet <URL:https://www.youtube.com/watch?v=hXz3NJAOqaU> [retrieved on 20240604]

## Beschreibung

Die vorliegende Erfindung betrifft ein Wassersportgerät, insbesondere ein Foilboard, mit einem Schwimmkörper, vorzugsweise in Form eines Schwimmbretts, und einer für den Vortrieb des Wassersportgeräts vorgesehenen Vortriebsvorrichtung.

Ein derartiges Wassersportgerät ist insbesondere dann als Foilboard ausgebildet, wenn der Schwimmkörper als Schwimmbrett ausgebildet ist und zumindest eine Tragflächenvorrichtung mit einer, insbesondere mit zumindest zwei Tragflächen aufweist. Derartige Wassersportgeräte dienen regelmäßig zur Fortbewegung von Personen, welche sich dazu auf der von der Tragflächenvorrichtung abgewandten Seite des Schwimmkörpers aufhalten, über Gewässer. Während der Fortbewegung ist die Tragflächenvorrichtung regelmäßig unterhalb der Wasseroberfläche angeordnet.

Ein anderes Wassersportgerät kann beispielsweise als Tauchscooter ausgebildet sein.

Aus der US 2018/0072383 A1 ist ein Foilboard mit einer Tragflächenvorrichtung bekannt, die durch das verwendete Foil ein ausreichend tiefes Gewässer benötigt, da die Tragflächenvorrichtung ansonsten den Grund berührt und beschädigt wird. Für den Einsatz sind somit regelmäßig von einem Ufer oder Strand entfernte Bereiche eines Gewässers notwendig.

Die US 2014/134900 A1 offenbart ein motorisiertes Surfbrett, welches auf Basis der Signale eines Spezialhandschuhs wieder zum Surfer zurückfahren kann. Aus der EP 3 214 521 A1 ist ein System bekannt, ein Schiff an bestimmten Relativposition zu halten.

Die CN 208 760 860 U offenbart ein Foilboard mit einer Haltevorrichtung, die zum Zwecke des Transports und Verstauens klappbar ist. In der US 6 178 905 B1 ist ein Tragflächenfahrzeug für Gewässer mit einem umgelenkten Antriebsstrang beschrieben. Die WO 2016/130022 A1 offenbart eine über einen Wasserstrahl über die Wasseroberfläche hebbare Sitzplattform.

In einem Youtube-Video (https://www.youtube.com/watch?v=hXz3NJAOqaU) ist ein Geofencing-System für Jetski beschrieben, durch das die Geschwindigkeit eines Jetskis bei Verlassen eines vorgegebenen Bereiches reduziert wird.

Aufgabe der Erfindung ist die Bereitstellung eines Wassersportgerätes, dessen Einsatz kontrollierbarer und damit sicherer erfolgen kann.

Die Aufgabe wird gelöst durch einen Gegenstand gemäß Anspruch 1. Vorteilhafte Ausgestaltungen der Erfindung sind den hierauf rückbezogenen Unteransprüchen sowie der nachfolgenden Beschreibung zu entnehmen.

Erfindungsgemäß weist das Wassersportgerät und insbesondere die Vortriebsvorrichtung wenigstens eine zur Positionsbestimmung verwendbare Sensoranordnung auf, wobei eine Steuereinheit des Wassersportgeräts zwecks Geofencing und/oder Homing zur Erzeugung von Steuersignalen auf Basis von Signalen der Sensoranordnung ausgebildet ist, dergestalt, dass die Steuereinheit Steuersignale zur automatisierten Ansteuerung einer Einsatzstelle des Wassersportgeräts erzeugt.

Mittels der Steuersignale werden ein oder mehrere steuerbare Elemente des Wassersportgeräts angesteuert. Hierzu können insbesondere ein Motor der Vortriebsvorrichtung, bewegliche Mittel zum Erzeugen einer Ausrichtung eines Wasserstrahls (z.B. ein Flügel, Motor, Ruderblatt, eine Finne und/oder Düse), und/oder ein- und ausfahrbare Elemente (ein Schwert, eine Halte- und/oder Tragflächenvorrichtung), die die Schwimmeigenschaften des Wassersportgeräts beeinflussen, gehören.

Unter Geofencing wird vorliegend das insbesondere automatische Erstellen und Auslösen von Steuersignalen bei Verlassen eines vorgegebenen Bereiches des bebefahrenen Gewässers oder Erreichen eines vorgegebenen und dann insbesondere gesperrten Bereiches des befahrenen Gewässers verstanden.

Unter Homing wird das automatisierte Ansteuern einer Einsatzstelle des Wassersportgeräts auf Basis entsprechend erzeugter Steuersignale einer Steuereinheit oder einer Kontrolleinheit verstanden.

Erfindungsgemäße Wassersportgeräte sind Hydrofoil- oder Foilboards Die erfindungsgemäßen Wassersportgeräte werden insbesondere im Freizeit- und Erholungsbereich eingesetzt.

Die Sensoranordnung weist für den jeweiligen Zweck bekannte Sensoren auf. Beispielsweise erfolgt gemäß einer Weiterbildung der Erfindung eine erfindungsgemäße Positionsbestimmung umfassend den Abstand über Grund insbesondere mittels schallbasierter Verfahren und zugehöriger Sende- und Empfangssensoren, deren Signale von der Steuereinheit ausgewertet werden.

Die Steuereinheit umfasst für die Steuerung des Wassersportgeräts und insbesondere der Vortriebsvorrichtung übliche Mittel wie eine Mensch-Maschine-Schnittstelle, elektrische und/oder elektronische Datenverarbeitungsmittel sowie Schnittstellen zu etwaig vorhandenen funktionalen Systemen wie Sensoren. Eine Mensch-Maschine-Schnittstelle weist insbesondere ein Headset umfassend zumindest einen Kopfsensor zur Aufnahme von Bewegungen zumindest eines Teils des Kopfes einer im Betrieb auf dem Wassersportgerät befindlichen Person auf. Hierdurch können die Arme und Beide frei zur Balancierung bewegt werden, ohne etwaige Steuerungsmittel in der Hand zu halten. Beispielsweise kann durch gezielte und vorab festlegbare oder festgelegte Bewegungsabläufe, die von der Steuereinheit vorgegeben oder von dieser erlernt werden können, beispielsweise mehrmaliges Nicken oder Schütteln des gesamten Kopfes die Vortriebsgeschwindigkeit erhöht oder verringert werden. Zur Erkennung dieser Bewegung weist das Headset z.B. einen Beschleunigungssensor als Kopfsensor auf.

Vorzugsweise weist die Steuereinheit darüber hinaus eine Schnittstelle zu einer Kommunikationseinheit auf oder diese ist direkt in die Steuereinheit integriert. Die Steuereinheit ist vorzugsweise in einem Gehäuse oder einer Ausnehmung des Schwimmkörpers angeordnet, sie kann allerdings auch verteilt an verschiedenen Bereichen des Wassersportgeräts angeordnet sein. Für die Kommunikation einzelner Komponenten des Wassersportgeräts ist bevorzugt ein Bus-System verwendet.

Insbesondere umfasst die Positionsbestimmung die Bestimmung der geografischen Position, insbesondere umfassend den Längen- und Breitengrad. Vor dem Hintergrund verfügbarer Positionssensoren, die beispielsweise zur Erfassung von Signalen eines GPS-, Glonass-, oder Beidou-Systems verwendet werden, können automatisiert Steuersignale wie beispielsweise eine Reduzierung der Motorleistung einer Vortriebsvorrichtung automatisiert dann erzeugt werden, wenn ein vorgegebener Bereich verlassen wird.

Vorzugsweise sind die Sensoranordnung und/oder die Steuereinheit zur Bestimmung des Abstands zu einer Einsatzstelle ausgebildet, so dass beispielsweise bei Erreichen eines maximalen Abstands entsprechende Steuersignale erzeugt werden. Die Bestimmung des Abstands zu einer Einsatzstelle kann beispielsweise über die Positionsbestimmung und die Definition des Einsatzorts rein lokal auf Seiten des Wassersportgeräts erfolgen, sie kann auch über eine bidirektionale Kommunikation mit auf Seite des Wassersportgeräts und auf Seite der Einsatzstelle vorhandener Kommunikationsmittel erfolgen, so dass beispielsweise über Laufzeiten der Kommunikationssignale oder deren Signalstärke der Abstand bestimmt werden kann.

Vorzugsweise ist die Sensoranordnung, die allgemein verschiedene Sensoren an verschiedenen Positionen des Wassersportgeräts umfassen kann, zur Bestimmung der absoluten oder relativen Geschwindigkeit des Wassersportgeräts ausgebildet, so dass zum Beispiel beim Abfahren von größeren Wellen die hiermit einhergehende Beschleunigung unterstützt werden kann, indem die Leistung der Vortriebsvorrichtung erhöht wird.

Vorzugsweise weist die Steuereinheit zwecks Erstellung von Steuersignalen Mittel zum Abgleich der Position mit einer intern oder extern vorgegebenen Karte auf. Eine in einem Datenspeicher der Steuereinheit vorgegebene Karte der Umgebung kann beispielsweise Fahrverbotszonen aufweisen, so dass beim Abgleichen der ermittelten Position mit der Karte ein Steuersignal beim Erreichen eines verbotenen Bereiches erstellt wird. Insbesondere kann beim Eindringen in einen solchen Bereich über eine Mensch-Maschine-Schnittstelle eine entsprechende Information ausgegeben werden und beispielsweise eine Anzeige mit einer Richtungsangabe zum Erreichen des nächsten erlaubten Bereichs ausgegeben werden.

Alternativ oder ergänzend kann auf Basis der Position auf einer Karte und/oder nach Ablauf eines vorgebbaren Zeitraums ein Kurs zur Rückkehr des Wassersportgeräts zur Einsatzstelle berechnet und automatisch in entsprechende Steuersignale umgesetzt werden, so dass das Wassersportgerät automatisch zur Einsatzstelle oder zu einem vorgegebenen Zielpunkt zurückkehrt.

Gemäß einer weiteren Ausbildung der Erfindung ist eine externe Kontrollvorrichtung vorhanden, die zur Übermittlung von auf Basis der Position des Wassersportgeräts erzeugten Steuersignalen an die Steuereinheit ausgebildet ist. Eine solche, EDVgestützte Kontrollvorrichtung umfasst notwendige Kommunikationsmittel auf Seiten des Wassersportgeräts und der externen, z.B. am Ufer befindlichen Kontrollvorrichtung. Die Kontrollvorrichtung kann beispielsweise auch auf einem Schiff vorhanden sein, von der das Wassersportgerät startet. Vorzugsweise kann die Fahrverbotszone dynamisch aufgrund der Position des Schiffs erzeugt werden, z.B. als um das Schiff herum befindlicher Kreis entlang der Wasseroberfläche mit einem Durchmesser von 300 m.

Vorteilhafterweise ist die Steuereinheit zur Kommunikation mit einer Steuereinheit einer weiteren Vortriebsvorrichtung desselben oder eines weiteren Wassersportgeräts ausgebildet ist. Hierdurch ergeben sich eine Vielzahl von Interaktionsmöglichkeiten zwischen beiden Wassersportgeräten bzw. deren Nutzern. Beispielsweise können ein Lehrer-/Schülermodus oder ein Tandem-Modus für Synchronfahrten realisiert werden. Ebenfalls können Verfolgungsmodi umgesetzt werden, wobei beispielsweise das Erreichen eines minimalen, insbesondere vorgebbaren Abstands als Erfolg gewertet und die Fahrt der Wassersportgeräte verlangsamt wird. Auch sind die Geschwindigkeiten der beiden oder mehrerer Wassersportgeräte aneinander angleichbar oder in Bereichen vorgebbar. Insbesondere ist die Steuereinheit hierbei zur Erzeugung von Steuersignalen für eine oder beide Vortriebsvorrichtungen aufgrund der von dem weiteren Wassersportgerät übermittelten Positions-, Steuer- und/oder Fahrsignalen/-daten ausgebildet ist.

Die Einsatzmöglichkeiten eines erfindungsgemäßen Wassersportgeräts werden ausgeweitet, wenn gemäß einer weiteren erfindungsgemäßen Weiterbildung das Wassersportgerät zwei Vortriebsvorrichtungen aufweist, wobei in einer Draufsicht zwischen den beiden Vortriebsvorrichtungen ein Personenbereich vorhanden ist. Als Personenbereich wird derjenige Bereich verstanden, der zum Aufenthalt von Personen während des Betriebs des Wassersportgeräts vorhanden ist und in dem ein oder mehrere Personen zum Beispiel stehen, knien, liegen und/oder sitzen können.

Vorzugsweise umfasst ein erfindungsgemäßes Wassersportgerät eine Tragflächenvorrichtung, die mittels einer Haltevorrichtung am Schwimmkörper befestigt ist, wobei die an einem Lenker der Haltevorrichtung angeordnete Tragflächenvorrichtung wenigstens eine, vorzugsweise zumindest zwei Tragflächen aufweist und wobei der Schwimmkörper in der Betriebsstellung und während einer Vorwärtsbewegung aufgrund eines durch die Tragflächenvorrichtung bewirkten Auftriebs in eine von einer Wasseroberfläche beabstandete Position überführbar ist. Durch diese Ausbildung kommen die nachbeschriebenen Vorteile einem als Foilboard ausgebildeten Wassersportgerät zu. Vorzugsweise ist das Wassersportgerät zur Überführung der Tragflächenvorrichtung aus der Betriebsstellung unterhalb des Schwimmkörpers in eine Ruhe- und/oder Startposition nahe des Schwimmkörpers oder zumindest teilweise in diesem auf Basis der Position des Wassersportgeräts ausgebildet. Insbesondere aufgrund von einem Abstand über Grund und/oder von einer Entfernung von einer Einsatzstelle kann der Schwimmkörper wieder aus seiner von der Wasseroberfläche abgehobenen Position heraus und ins Wasser gebracht werden, wodurch sich automatisch die Fahrt verlangsamt. Dies kann insbesondere durch einen nachfolgend beschriebenen Antrieb oder durch eine Reduzierung der Motorleistung, die mit einer Geschwindigkeitsreduzierung einhergeht, bewirkt werden. Für letzteres ist die Haltevorrichtung in Abhängigkeit von der Geschwindigkeit im Wasser bewegbar, insbesondere über den von diesem ausgeübten Wasserdruck gegen ein etwaiges Gestänge der Haltevorrichtung.

Vorzugsweise weist das Wassersportgerät einen weiteren Lenker auf, der einenends schwenkbar am oder im Schwimmkörper gelagert ist und anderenends schwenkbar an der Tragflächenvorrichtung angeordnet ist. Insbesondere sind der erste Lenker und der weitere Lenker zumindest in der Betriebsstellung der Tragflächenvorrichtung in Fahrtrichtung hintereinander angeordnet. Alternativ oder ergänzend ist/sind der erste Lenker und/oder der zweite Lenker insbesondere am Schwimmkörper und/oder an der Tragflächenvorrichtung oder einer damit starr verbundenen Einheit oder Aufnahme schwenkbeweglich angeordnet. Insbesondere ist also zumindest einer der Lenker schwenkbeweglich an einer Aufnahme für die zumindest eine Tragflächenvorrichtung oder einer Aufnahme der Tragflächenvorrichtung angeordnet. Die Schwenkachsen sind dabei insbesondere quer zur Fahrtrichtung und im Betrieb parallel zur Wasseroberfläche ausgerichtet. Hierdurch lässt sich die Haltevorrichtung als Parallelogrammführung ausbilden, die besonders zuverlässig ist und durch die die Tragflächenvorrichtung insbesondere auch in der Ruhe- und/oder Startposition unterhalb des Schwimmkörpers verbleibt.

Alternativ oder zusätzlich umfasst die Haltevorrichtung bevorzugt weitere Lenker, die jeweils mit einem der beiden Lenker gekoppelt sind und zumindest in der Betriebsstellung zwischen dem Schwimmkörper und der Tragflächenvorrichtung aneinander anschließen und Kraft aufeinander übertragen. Insbesondere sind die beiden ersten bzw. weiteren Lenker schwenkbeweglich zueinander, wodurch sich eine Kniehebel- bzw. Faltmechanik als Haltevorrichtung herstellen lässt. Beispielsweise sind jeweils zwei ein Kniegelenk ausbildende Lenker in Fahrtrichtung hintereinander angeordnet.

Sobald ausreichend tiefes Wasser erreicht ist, kann die Tragflächenvorrichtung insbesondere mittels eines Antriebs in die von dem Schwimmkörper stärker beabstandete Betriebsstellung überführt werden.

Vorzugsweise ist das Wassersportgerät dergestalt ausgebildet, dass die Vortriebsvorrichtung während des Übergangs der Tragflächenvorrichtung aus der Ruhe- und/oder Startposition in die Betriebsstellung weiterhin Vortrieb liefert und die Fahrt des Wassersportgeräts sich nicht verlangsamt.

Der Antrieb der Haltevorrichtung ist vorzugsweise als elektro-mechanischer oder elektro-pneumatischer Antrieb ausgebildet, über den die Tragflächenvorrichtung aus einer Ruhe- und/oder Startposition in die Betriebsstellung und/oder aus der Betriebsstellung in die Ruhe- und/oder Startposition überführbar, insbesondere ein- und ausfahrbar und/oder klappbar, ist.

In der Ruhe- und/oder Startposition ist die Tragflächenvorrichtung zugunsten einer größeren Kompaktheit des Wassersportgerätes näher am Schwimmkörper angeordnet als in der Betriebsstellung. Insbesondere können Teile der Halte- und/oder Tragflächenvorrichtung, die in der Betriebsstellung vom Schwimmkörper entfernt sind, in der Ruhe- und/oder Startposition teilweise in zumindest einer Ausnehmung des Schwimmkörpers angeordnet sein. Insbesondere wird die Haltevorrichtung zur Überführung der Tragflächenvorrichtung in die Ruhe- und/oder Startposition eingeklappt und/oder z.B. teleskopartig eingefahren. Insbesondere wird der zumindest eine, erste Lenker zur Überführung der Tragflächenvorrichtung relativ zum Schwimmkörper um zumindest 20°, bevorzugt um zumindest 40°, besonders bevorzugt um zumindest 80° verschwenkt. Vorzugsweise sind die Tragflächen in der Ruhe- und/oder Startposition in einer seitlichen Ansicht nicht mehr als 50 cm von dem Schwimmkörper beabstandet. Ein automatisch durch die Steuereinheit und/oder eine externe Kontrollvorrichtung bewirktes Geofencing wird dem Nutzer insbesondere durch das Einnehmen der Start- und/oder Ruheposition und/oder eine Reduzierung der Motorleistung signalisiert.

Der Schwimmkörper ist insbesondere ein flacher, länglicher Körper, dessen Dichte deutlich unterhalb derjenigen von Wasser liegt. Der Schwimmkörper ist insbesondere derart ausgebildet, dass er im Betrieb vorzugsweise unabhängig von einer Fahrtgeschwindigkeit jedenfalls teilweise oberhalb der Wasseroberfläche angeordnet ist. Im Betrieb reicht die Haltevorrichtung vom Schwimmkörper zur Tragflächenvorrichtung unterhalb des Schwimmkörpers. Eine durch die Tragflächenvorrichtung erzeugte Auftriebskraft wird durch die Haltevorrichtung auf den Schwimmkörper übertragen. Insbesondere weist er eine surfbrettartige Form auf.

Vorzugsweise weist der Antrieb einen Energiespeicher insbesondere zur Speicherung mechanischer Energie auf, die die im Falle der Freisetzung die für das Ein- und Ausfahren oder -klappen des Lenkers notwendige Energie zur Verfügung stellt. Beispielsweise umfasst der Energiespeicher einen Akku zur Speicherung elektrischer Energie, einen Tank zur Speicherung eines druckbeaufschlagten Fluids oder insbesondere einen mechanischen Energiespeicher wie eine Feder. In einer ersten Ausführungsform der Erfindung ist der Energiespeicher zur Speisung eines Antriebsmotors ausgebildet, welcher die Überführung der Tragflächenvorrichtung einleitet. In einer bevorzugten weiteren Ausgestaltung der Erfindung gibt der Energiespeicher gespeicherte Energie unmittelbar, ohne zwischengeschalteten Antriebsmotor, als mechanische bzw. kinetische Energie zur Überführung frei. Bevorzugt ist der Energiespeicher einerseits mechanisch mit der Haltevorrichtung gekoppelt und andererseits mittel- oder unmittelbar mit einer Aufladeeinrichtung wie einem Antriebsmotor gekoppelt, die zur Aufladung des Energiespeichers insbesondere während der Nutzung des Wassersportgerätes ausgebildet ist.

Vorzugsweise ist zumindest ein Teil der Vortriebsvorrichtung, nämlich insbesondere ein Vortriebskörpergehäuse, lösbar an einer Aufnahme der Tragflächenvorrichtung festgelegt, so dass ein einfacher Austausch zu Reparatur- oder Ladezwecken eines in der Vortriebsvorrichtung enthaltenen Vortriebsenergiespeichers, beispielsweise eines Akkus, ermöglicht ist. In dem Vortriebskörpergehäuse ist insbesondere der Impeller der Vortriebsvorrichtung in einem entsprechenden Strömungskanal angeordnet. Der Impeller ist vorzugsweise als wellen- bzw. nabenloser Impeller ausgebildet. Der Strömungskanal im Vortriebskörpergehäuse wird somit nicht durch eine entsprechend Welle oder Nabe verengt.

Eine erfindungsgemäße Vorrichtung baut weiterhin betriebssicherer für die nutzende Person, wenn sie gemäß einer weiteren Weiterbildung einen Speichersensor zur Überwachung des Vortriebsenergiespeichers aufweist, wobei das Wassersportgerät zur Reduzierung der Leistung oder Abschaltung der Vortriebsvorrichtung aufgrund des Signals des Speichersensors ausgebildet ist. Hierdurch kann beispielsweise eine Tiefenentladung der Akkus vermieden werden und einer nutzenden Person eine notwendige Rückkehr zu einer Einsatzstelle bevor die Vortriebsenergie aufgebraucht ist, signalisiert werden.

Die Vortriebsvorrichtung und damit das Wassersportgerät ist vorzugsweise sowohl in der Ruhe- und/oder Startposition als auch in der Betriebsstellung betreibbar, so das einerseits verschiedene Könnensstufen etwaiger Nutzer berücksichtigt werden können und andererseits eine Rückkehr in einen erlaubten Bereich oder zur Einsatzstelle möglich ist.

Vorzugsweise umfasst die Vortriebsvorrichtung neben den für das Geofencing notwendigen Sensoren wenigstens einen Sensor, vorzugsweise eine Mehrzahl von Sensoren aus einer Gruppe umfassend Gyrosensoren, Geschwindigkeitssensoren, (zusätzliche) Positionssensoren (GPS, Glonass, Beidou oder dgl.), Abstandssensoren, d.h. Sensoren zur Erfassung des Abstands von Gegenständen oder Strukturen (insbesondere Ultraschall, Echolot, Sonar), Infrarotsensoren und Neigungssensoren. Die Ausstattung des Wassersportgeräts mit einem oder mehreren solcher Sensoren ermöglicht die Ausbildung eines "intelligenten" Wassersportgeräts, welches seine Nutzung nicht nur nachvollziehbarer durch Speicherung der Sensordaten in einem entsprechenden Speicher sondern insbesondere komfortabler, einfacher sowie sicherer werden lässt. Beispielsweise kann ein zusätzlicher Positionssensor zur Nachverfolgung des Fahrwegs oder einer Verbesserung der für das Geofencing bestimmten Position, ein Geschwindigkeitssensor zur Einstellung der Haltevorrichtung und/oder zumindest von Teilen der Tragflächenvorrichtung, Neigungssensoren zur Ausbalancierung des Wassersportgeräts in einer Betriebsstellung und Infrarotsensoren zur Erfassung von in der Umgebung befindlichen Personen verwendet werden. In Abhängigkeit der Sensordaten kann das Wassersportgerät automatisiert Einstellungen z.B. der Fahrtgeschwindigkeit, der Höhe über der Wasseroberfläche oder der Stellung der Haltevorrichtung vornehmen. Auch für einen oder mehrerer dieser Vorgänge ist die Steuereinheit zur Verarbeitung der Signale der Sensoren insbesondere zu Steuersignalen ausgebildet. Es versteht sich, dass die Steuereinheit auch hierfür jeweils entsprechende oder identische Datenverarbeitungsmittel, Betriebsenergiespeicher (insbesondere einen oder mehrere Akkus oder Flüssigenergiespeicher) und Kommunikationsmittel einschließlich einer Mensch-Maschine-Schnittstelle aufweist.

Alternativ oder ergänzend zu einem Tiefensensor, mit dem die Eintauchtiefe des Wassersportgeräts erfasst wird, umfasst eine erfindungsgemäße Weiterbildung eines Wassersportgeräts wenigstens einen Fahrtzustandssensor zur Bestimmung des Abstands des Schwimmkörpers von der Wasseroberfläche. Tiefen- und Fahrtzustandssensor können auch durch einen einzigen Sensor oder eine einzige Sensoranordnung ausgebildet werden.

Insbesondere handelt es sich bei dem Fahrtzustandssensor um eine vorzugsweise in einen Lenker der Haltevorrichtung integrierte oder an diese oder diesen angeordnete Sensoreinheit. Beispielsweise kann es sich um einen sich entlang eines Lenkers der Haltevorrichtung erstreckenden oder in diesen über die Lenkerlänge integrierten, auf kapazitiver Basis arbeitenden Sensorstreifen handeln. Ebenfalls kann es sich um eine Sensoreinheit mit einer Mehrzahl von insbesondere kapazitiven Sensoren handeln, die beabstandet voneinander längs der Haltevorrichtung beispielsweise in oder an deren Lenker angeordnet ist. Durch die Sensordaten kann bei bekannter Position der Haltevorrichtung bzw. deren Lenker mittels der Steuereinheit auf den Abstand des Schwimmkörpers von der Wasseroberfläche geschlossen und insbesondere in Kombination mit weiteren Sensordaten beispielsweise zur Fahrtgeschwindigkeit und/oder der Tiefe des Wassers ein gewünschter Fahrtzustand angestrebt werden, beispielsweise durch Anheben oder Absenken des Schwimmkörpers mittels einer Einstellung einer oder mehrerer Tragflächen oder durch Betätigen der Haltevorrichtung oder durch eine Änderung der Fahrgeschwindigkeit. Dies kann ebenfalls in Abhängigkeit der Informationen zur Position des Wassersportgeräts erfolgen, insbesondere, ob es sich in einem zulässigen Bereich aufhält oder außerhalb dieses zulässigen Bereichs. Es versteht sich, dass ein solcher Fahrtzustandssensor, der als einzelner Sensor oder als Sensoreinheit umfassend eine Mehrzahl von Sensoren in der Haltevorrichtung oder an dieser angeordnet ist, auch bei starr an dem Schwimmkörper angeordneten Haltevorrichtungen Verwendung finden kann, bei denen die Haltevorrichtung sowohl in der Betriebsstellung als auch in der Ruhe- und/oder Startposition die Tragflächenvorrichtung in derselben Position zum Schwimmkörper hält.

Insbesondere ist der Fahrtzustandssensor einlaminiert, wobei der Lenker der Haltevorrichtung, die den Sensor aufweist, vorzugsweise aus einem Faserverbundwerkstoff hergestellt ist, so dass ein einerseits stabiler Aufbau des Lenkers erreicht wird und andererseits gleichzeitig die Integration des Fahrtzustandssensors vereinfacht ist. Mit Druckprozessen wie Siebdruck, Dispensen oder Inkjet-Druck können maßgeschneiderte Sensorstrukturen direkt auf das zu verwendende Vlies oder Gewebe appliziert werden, wobei der Fahrtzustandssensor durch die Integration des bedruckten Vlies oder Gewebes in den Schichtaufbau und anschließender Faserverbundherstellung z.B. durch Vakuuminfusion integraler Bestandteil der Struktur der Haltevorrichtung wird.

Ein mit einem Fahrtzustandssensor ausgestattetes Wassersportgerät insbesondere in Form eines Hydrofoil-Boards weist bevorzugt eine optische Anzeigeeinheit auf, die sich insbesondere zumindest über eine Hälfte der Länge der Oberseite des Schwimmkörpers erstreckt und die insbesondere zur Anzeige des Abstands des Schwimmkörpers von der Wasseroberfläche ausgebildet ist. Vorzugsweise kann der Abstand von der Wasseroberfläche beispielsweise mit der Anzahl und/oder Anordnung der Leuchtpunkte der Anzeigeeinheit korrelieren, um auch während der Fahrt eine schnell erfassbare und ausreichend große Anzeige zu ermöglichen. Insbesondere können hierfür RGB-Dioden verwendet werden. Die optische Anzeigeeinheit kann insbesondere Teil der Mensch-Maschine-Schnittstelle sein bzw. stellt eine solche dar. Z.B. leuchten bei einem Aufliegen des Schwimmkörpers auf dem Wasser keine oder nur wenige z.B. rote Leuchtmittel auf und je größer der Abstand wird ändert sich die Anzahl und/oder Farbe der leuchtenden Leuchtmittel über die Schwimmkörperlänge, bis bei einem gewünschten Zustand eine bestimmte beispielsweise maximale Anzahl von Leuchtmitteln aktiviert ist. Beispielsweise kann ein bestimmter, gewünschter oder optimaler Abstand zur Wasseroberfläche mit überwiegend oder ausschließlich grün leuchtenden Leuchtmitteln in Form von z.B. RGB-Dioden gekennzeichnet werden. Ebenfalls kann je nach Anzahl und Anordnung der in den Schwimmkörper integrierten Leuchtmittel ein Richtungspfeil für das Homing oder Geofencing angezeigt werden.

Vorzugsweise sind die Vortriebsvorrichtung und die Steuereinheit zur insbesondere automatischen Schubsteuerung, weiter insbesondere zur automatischen Schubvektorsteuerung, ausgebildet. Hierdurch wird einer nutzenden Person eine zusätzliche Steuermöglichkeit zur Verfügung gestellt, so dass beispielsweise besonders enge Kurven gefahren oder sogar Sprünge getätigt werden können. In einer automatisierten Ausführung ist in Verbindung mit insbesondere Lagesensoren wie Gyrometern eine Selbststabilisierung des Wassersportgeräts insbesondere in der Betriebsstellung gegeben. Die Steuereinheit gleicht somit Instabilitäten aus, was insbesondere Anfängern schneller ein besseres Fahrerlebnis ermöglicht. Insbesondere ist die Steuereinheit zur Selbststabilisierung des Wassersportgeräts mittels der Schubvektorsteuerung während des Übergangs in die Betriebsstellung und/oder beim Abheben des Schwimmkörpers von der Wasseroberfläche ausgebildet, da während dieser Phasen große Einflüsse auf die nutzende Person erfolgen.

Für die Schubsteuerung ist die Vortriebsvorrichtung insbesondere mit einer Vektordüse versehen, d.h. einer ausrichtbaren Düse, die die Auslassöffnung des Strömungskanals bildet.

Vorzugsweise umfasst das Wassersportgerät eine für den Vortrieb desselben vorgesehene Vortriebsvorrichtung, deren schwimmkörperseitig angeordneter Vortriebsmotor über einen winkelbeweglichen Vortriebsstrang antriebsmäßig mit einem Vortriebselement verbunden ist. Hierdurch ist die Tragflächenvorrichtung stromlinienförmiger zu bauen.

Weitere Vorteile und Einzelheiten der Erfindung sind der nachfolgenden Figurenbeschreibung zu entnehmen. In den Abbildungen zeigt schematisch dargestellt:
- Fig. 1: einen erfindungsgemäßen Gegenstand in einer Seitenansicht,
- Fig. 2: den Gegenstand nach Fig. 1 in einer Ansicht von hinten,
- Fig. 3: den Gegenstand nach Fig. 1 in einer Einsatzsituation,
- Fig. 4: zwei erfindungsgemäße Gegenstände in einer weiteren Einsatzsituation,
- Fig. 5: einen weiteren erfindungsgemäßen Gegenstand in einer perspektivischen Ansicht,
- Fig. 6: den Gegenstand nach Fig. 5 in einer Start- und/oder Ruheposition,
- Fig. 7 und 8: einen weiteren erfindungsgemäßen Gegenstand.

Einzelne technische Merkmale der nachfolgend beschriebenen Ausführungsbeispiele können auch in Kombination mit den Merkmalen des unabhängigen Anspruchs zu erfindungsgemäßen Weiterbildungen führen. Sofern sinnvoll sind funktional gleichwirkende Teile mit identischen Bezugsziffern versehen.

Ein erfindungsgemäßes Wassersportgerät 2 umfasst einen Schwimmkörper 4, der über eine Tragflächenvorrichtung 6 mit einer Haltevorrichtung 8 verbunden ist. Die Tragflächenvorrichtung 6 umfasst mehrere Lenker 10, die einenends gelenkig am Schwimmkörper 4 und anderenends gelenkig an der Tragflächenvorrichtung 8 angeordnet sind. Über einen gestrichelt dargestellten, innenliegenden Antrieb 12 werden die in Fahrtrichtung F vorderen Lenker 10, die auf einer gemeinsamen Welle angeordnet sind, bewegt. Über die Kopplung mittels einer Vortriebsvorrichtung 50 der Tragflächenvorrichtung 6 sind die in Fahrtrichtung F hinteren Lenker 10 zwangsgeführt. Insofern ist lediglich ein einziger, ausreichend dimensionierter Antrieb 12 notwendig.

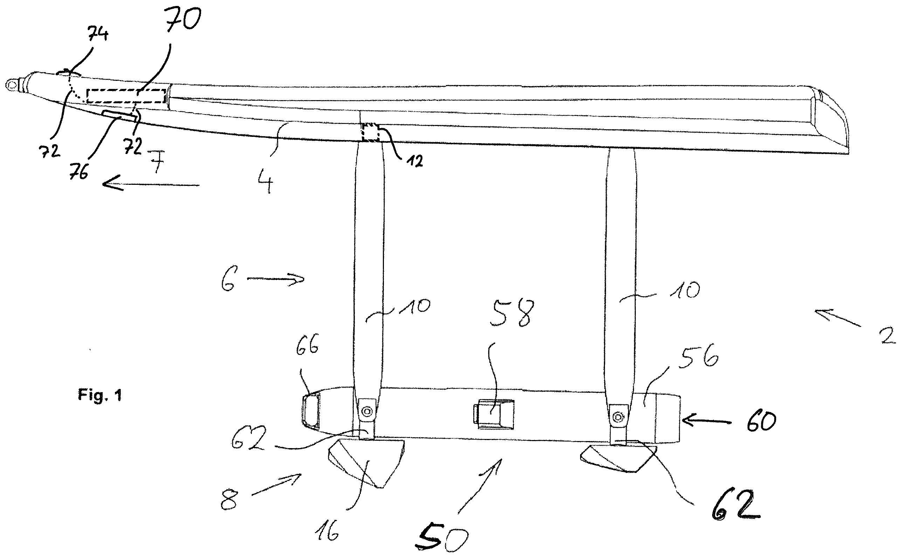

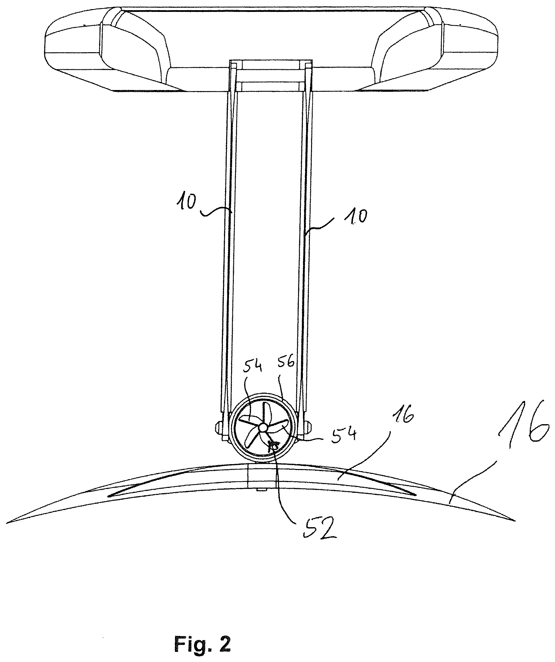

Die Lenker 10 sind strömungsoptimiert ausgebildet mit einer in Fahrtrichtung F betrachtet geringeren Erstreckung als quer dazu (Fig. 1 und 2). Darüber hinaus sind die Anströmflächen gerundet und die Lenker im Querschnitt insbesondere tropfen- bzw. flügelartig ausgebildet.

Die Vortriebsvorrichtung 50 ist vorliegend mit einem nabenlosen Impeller 52 ausgebildet (Fig. 2). Der zugehörige Motor weist einen Rotor auf, der mit seiner Innenseite den Strömungskanal mit ausbildet und entsprechend hohl ist, wobei auf der Innenseite des Rotors die Schaufeln 54 befestigt sind. Der Rotor ist auf seiner vom Strömungskanal weg gerichteten Außenseite außerhalb des Strömungskanals gelagert und läuft in einem Stator, der in einem Vortriebskörpergehäuse 56 angeordnet ist.

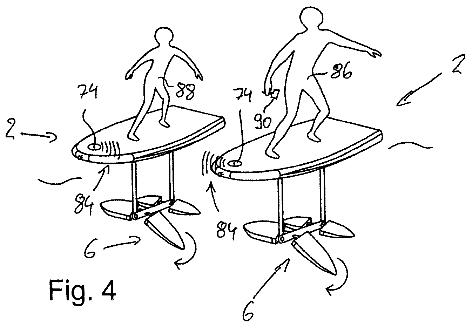

Zwei seitlich abstehende Gehäusewände 58 (vgl. Fig. 1) begrenzen zwei als Einlassöffnungen ausgebildete und auf voneinander abgewandten Oberflächen befindliche Öffnungen, durch die das durch die Auslassöffnung 60 letztlich ausgestoßene und beschleunigte Wasser vorher in den innenliegenden Strömungskanal gelangt. Die Vortriebsvorrichtung umfasst das in zwei Aufnahmen 62 festgelegten Vortriebskörpergehäuse 56 mit einem innenliegenden Vortriebsenergiespeicher, dem als Innenläufer ausgebildeten Motor inkl. dem als nabenlosem Impeller ausgebildeten Vortriebselement sowie eine Steuereinheit 70, die mit einem Mensch-Maschine-Interface zur Bedienung der Vortriebsvorrichtung 50 ausgebildet ist. Entsprechende Leitungsmittel führen beispielsweise durch die Haltevorrichtung 8 in den Schwimmkörper 4 und werden von dort beispielsweise drahtlos zu einem Handgerät 90 des das Wassersportgerät 2 bedienenden Nutzers 86 übertragen (Fig. 4). Das Handgerät 90 ist Teil der Steuereinheit 70 oder drahtlos mit dieser verbunden.

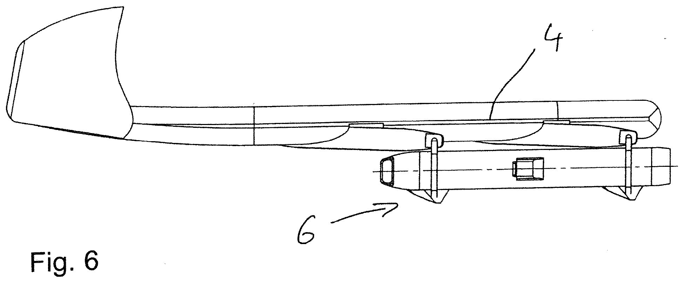

Über ein solches Handgerät kann beispielsweise das Überführen der Tragflächenvorrichtung 6 mit ihren Tragflächen 16 aus der gezeigten Betriebsstellung in eine in Fig. 6 gezeigte Start- und/oder Ruheposition der Tragflächenvorrichtung 6 dichter am Schwimmkörper 4 freigegeben oder ausgelöst werden.

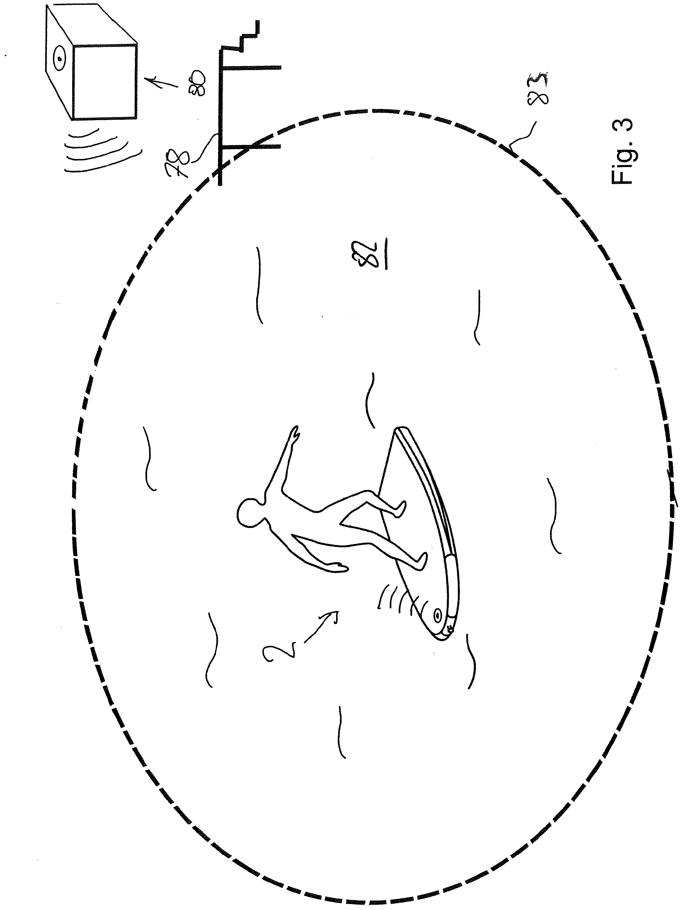

Die Überführung kann erfindungsgemäß beispielsweise durch Steuersignale einer im Schwimmkörper 4 angeordneten und daher lediglich gestrichelt dargestellten Steuereinheit 70 automatisch aufgrund deren Bewertung im Rahmen des Geofencing bewirkt werden (Fig. 1). Die Steuereinheit 70 erhält hierfür über eine punktiert dargestellte Signalleitung 72 Signale einer Sensoranordnung 74, wobei die Sensoranordnung 74 zumindest einen Sensor umfasst. Auf Basis dieser Signale werden Steuersignale erzeugt, wenn ein intern oder extern vorgegebener Bereich, in dem mit dem Wassersportgerät 2 gefahren werden darf, verlassen wird. Nur dann, wenn eine vorgegebene Begrenzung 83 eines Einsatzbereiches 82 des Wassersportgeräts 2 verlassen wird, wird in der Steuereinheit 70 automatisch ein Steuersignal erzeugt (vgl. Fig. 3). Dieses kann beispielsweise durch den Übergang der Tragflächenvorrichtung 6 in die Ruhe- und/oder Startposition der Tragflächenvorrichtung 6 und beispielsweise eine Drosselung der Antriebsleistung der Vortriebsvorrichtung 50 liegen. Die Sensoranordnung ist hierfür beispielsweise zur Aufnahme von GPS-Signalen oder anderen Lokalisationssignalen und/oder des Abstandes über Grund mittels eines Schallsignals ausgebildet. Für letzteres weist die Unterseite des Schwimmkörpers 4 entsprechende Sende- und Empfangseinheiten 76 auf. Diese sind ebenfalls wieder über eine entsprechende Signalleitung 72 mit der Steuereinheit 70 gekoppelt.

Das in den Fig. 1 und 2 dargestellte Foilboard kann dann über Gewichtsverlagerung gesteuert auch in der in Fig. 6 für ein anderes Ausführungsbeispiel gezeigten Position wieder zu seiner Einsatzstelle zurück überführt werden. Alternativ oder ergänzend kann das Foilboard auch gemäß Fig. 3 zur Bestimmung des Abstands zu einer Einsatzstelle 78 ausgebildet sein. Hierfür wird beispielsweise die Übermittlungsdauer eines zeitkodierten Signals zwischen einer der Einsatzstelle 78 zugeordneten zentralen Kontrollvorrichtung 80 und dem Wassersportgerät 2 bestimmt. Über eine solche Kontrollvorrichtung 80 können von einem entsprechende Zugriffsrechte besitzenden Benutzer auch weitere Steuerungsmöglichkeiten ausgeübt werden, insbesondere wenn das Wassersportgerät einen Einsatzbereich 82 über dessen Grenze 83 verlässt.

Die Sensoranordnung 74 kann auch um eine Kommunikationseinheit ergänzt sein, über die die Steuereinheiten 70 zweier entsprechend miteinander in einem Synchronmodus befindlichen Wassersportgeräte 2 miteinander kommunizieren können, indiziert durch die mit mehreren geschwungenen Linien dargestellten Signale 84. In einem solchen Modus können beispielsweise eine als Instrukteur befähigte Person 86 einer lernenden Person 88 mittels des drahtlos an der Steuereinheit 70 angebundenen Handgeräts 90 Fahrsignale vorgeben, die beispielsweise zur Einleitung einer Kurvenfahrt durch Abklappen der beweglichen Tragflächen 16 der Tragflächenvorrichtung 6 führen. Darüber hinaus ist durch die vorliegend nicht dargestellte, entsprechend programmierbare Steuereinheit 70 der Einsatzbereich der Wassersportgeräte 2 auf einen durch Geofencing definierten Bereich 82 beschränkt.

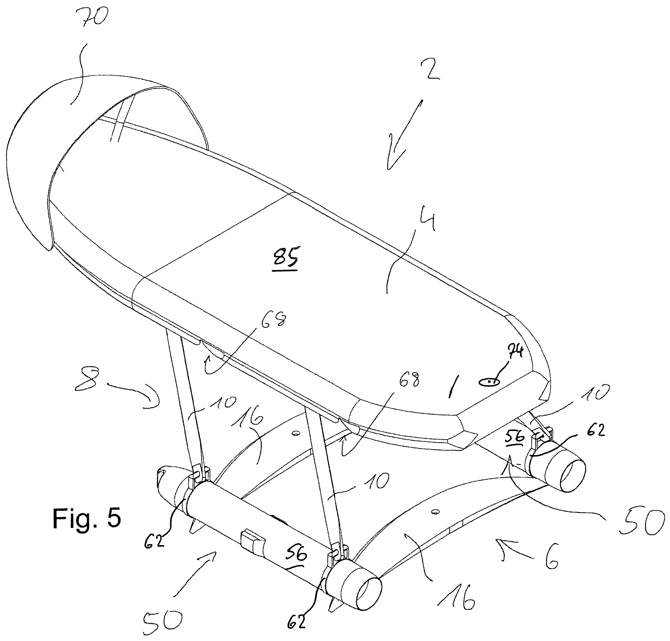

Prinzipiell gleichwirkend ist die weitere erfindungsgemäße Anordnung gemäß Fig. 5. Dieses im Vergleich zu dem der Figur 1 größer ausgebildete Wassersportgerät 2 ist ebenfalls als Foilboard ausgebildet, welches allerdings für den Einsatz mit zwei Personen auf dem Personenbereich 85 ausgelegt ist. Die Tragflächen 16 der Tragflächenvorrichtung 6 befinden sich zumindest in einer Drauf- bzw. Unteransicht im Wesentlichen zwischen den Vortriebsvorrichtungen 50. Die Tragflächenvorrichtung 6 umfasst hierbei Aufnahmen 62 für die Vortriebsvorrichtungen 50, an denen Lenker 10 der Haltevorrichtung 8 angeordnet sind. Diese verschwenken aus der dargestellten Betriebsstellung in einer Ruhe- bzw. Startposition, in der die Vortriebsvorrichtung 50 dichter am Schwimmkörper 4 angeordnet sind und die Lenker 10 in Ausnehmung 68 des Schwimmkörpers 4 zumindest teilweise angeordnet sind (Fig. 6). Zum besseren Schutz der auf dem Foil-Board stehenden bzw. liegenden Person ist ein Schild 71 am Schwimmkörper 4 angeordnet. Die Sensoranordnung 74 befindet sich vorliegend am hinteren Ende des Foil-Boards, in dem auch die Steuereinheit 70 angeordnet ist. Diese ist über nicht dargestellte Signal- und Versorgungsleitungen mit einem Akkumulator bzw. einer Vortriebsspeichereinheit der Vortriebsvorrichtungen 50, die jeweils im vorderen Teil der torpedoförmig ausgebildeten Vortriebsvorrichtungen 50 innerhalb des Vortriebskörpergehäuses 56 angeordnet sind verbunden.

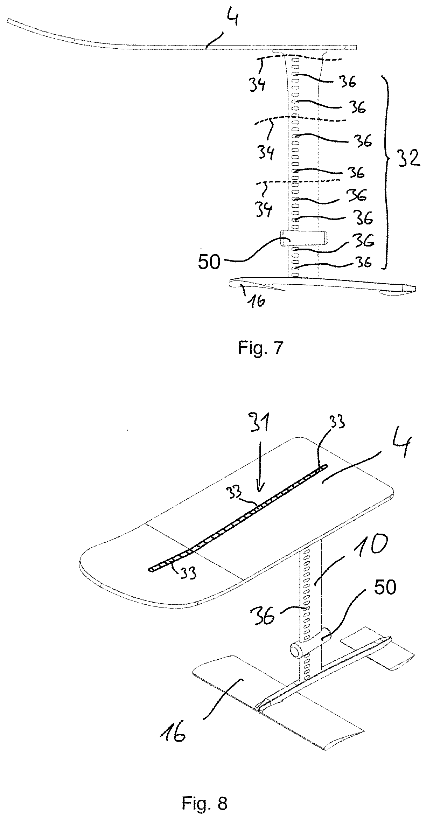

Gemäß einem weiteren erfindungsgemäßen Ausführungsbeispiel ist entlang eines Lenkers 10 der Haltevorrichtung 8 eine Mehrzahl von kapazitiven Sensoren 36 zur Ausbildung eines Fahrtzustandssensors 32 angeordnet (Fig. 7 und 8). Diese erstrecken sich gleichmäßig über einen Großteil des Lenkers 10 entlang dessen Längserstreckung und geben in Abhängigkeit davon, ob sie ober- oder unterhalb einer jeweils durch gestrichelte Linien indizierten Wasseroberfläche 34 angeordnet sind, entsprechende Daten an eine vorzugsweise im Schwimmkörper 4 angeordnete Steuereinheit. Hierdurch lässt sich in dieser ein Abstand des Schwimmkörpers 4 zur Wasseroberfläche 34 bestimmen, woraufhin bei ungewünschten Zuständen die Steuereinheit z.B. den Schub der Vortriebsvorrichtung 50, die in den Lenker 10 integriert ist, oder eine Winkelstellung einer Tragfläche 16 anpassen kann.

Das Ausführungsbeispiel der Figuren 7 und 8 weist weiterhin eine in den Schwimmkörper integrierte optische Anzeigeeinheit 31 auf, die den Abstand des Schwimmkörpers 4 von der Wasseroberfläche abbildet. Die Anzeigeeinheit 31 umfasst eine Mehrzahl von einlaminierten mehrfarbigen LED-Einheiten 33, so dass der Abstand von der Wasseroberfläche 34 über Anzahl und/oder Wellenlänge der leuchtenden LED-Einheiten 33 abgebildet werden kann.

## Patentansprüche

1. Wassersportgerät mit einem Schwimmkörper (4) in Form eines Schwimmbretts und einer für den Vortrieb des Wassersportgeräts vorgesehenen Vortriebsvorrichtung (50), mit einer Steuereinheit und wenigstens einer zur Positionsbestimmung umfassend die geografische Position verwendbare Sensoranordnung (74),
**dadurch gekennzeichnet, dass**
das als Foilboard ausgebildete Wassersportgerät (2) mit der Steuereinheit (70) zur Erzeugung von Steuersignalen auf Basis von Signalen der Sensoranordnung (74) zwecks Geofencing und Homing dergestalt ausgebildet ist, dass die Steuereinheit ausgebildet ist Steuersignale zur automatisierten Ansteuerung einer Einsatzstelle des Wassersportgeräts zu erzeugen.

2. Wassersportgerät nach Anspruch 1, **dadurch gekennzeichnet, dass** die Positionsbestimmung den Abstand über Grund umfasst.

3. Wassersportgerät nach Anspruch 1 oder 2, **dadurch gekennzeichnet, dass** die Positionsbestimmung die Bestimmung der geografischen Position umfassend den Längen- und Breitengrad umfasst.

4. Wassersportgerät nach einem der vorherigen Ansprüche, **dadurch gekennzeichnet, dass** die Sensoranordnung (74) und/oder die Steuereinheit (70) zur Bestimmung des Abstands zu einer Einsatzstelle (78) ausgebildet ist.

5. Wassersportgerät nach einem der vorherigen Ansprüche, **dadurch gekennzeichnet, dass** die Sensoranordnung (74) zur Bestimmung der absoluten oder relativen Geschwindigkeit des Wassersportgeräts ausgebildet ist.

6. Wassersportgerät nach einem der vorherigen Ansprüche, **dadurch gekennzeichnet, dass** die Steuereinheit (70) zwecks Erstellung von Steuersignalen Mittel zum Abgleich der Position mit einer intern oder extern vorgegebenen Karte aufweist.

7. Wassersportgerät nach einem der vorherigen Ansprüche, **gekennzeichnet durch** eine externe Kontrollvorrichtung (80), die zur Übermittlung von auf Basis der Position des Wassersportgeräts (2) erzeugten Steuersignalen an die Steuereinheit (70) ausgebildet ist.

8. Wassersportgerät nach einem der vorherigen Ansprüche, **dadurch gekennzeichnet, dass** die Steuereinheit (70) zur Kommunikation mit einer Steuereinheit (70) einer weiteren Vortriebsvorrichtung desselben oder eines weiteren Wassersportgeräts ausgebildet ist und insbesondere zur Erzeugung von Steuersignalen für eine oder beide Vortriebsvorrichtungen (50) aufgrund der von dem weiteren Wassersportgerät übermittelten Positions-, Steuer- und/oder Fahrsignalen/-daten ausgebildet ist.

9. Wassersportgerät nach einem der vorherigen Ansprüche mit zwei Vortriebsvorrichtungen (50), **gekennzeichnet durch** einen in einer Draufsicht zwischen den beiden Vortriebsvorrichtungen (50) vorhandenen Personenbereich (84).

10. Wassersportgerät nach einem der vorherigen Ansprüche, **gekennzeichnet durch** eine Tragflächenvorrichtung (6), die mittels einer Haltevorrichtung (8) am Schwimmkörper (4) befestigt ist, wobei die an einem Lenker (10) der Haltevorrichtung (8) angeordnete Tragflächenvorrichtung (6) wenigstens eine, vorzugsweise zumindest zwei Tragflächen (16) aufweist und wobei der Schwimmkörper in der Betriebsstellung und während einer Vorwärtsbewegung aufgrund eines durch die Tragflächenvorrichtung (6) bewirkten Auftriebs in eine von einer Wasseroberfläche beabstandete Position überführbar ist.

11. Wassersportgerät nach Anspruch 10, **dadurch gekennzeichnet, dass** das Wassersportgerät (2) zur Überführung der Tragflächenvorrichtung (6) aus der Betriebsstellung unterhalb des Schwimmkörpers (4) in eine Ruhe- und/oder Startposition nahe des Schwimmkörpers oder zumindest teilweise in diesem auf Basis der Position des Wassersportgeräts ausgebildet ist.

12. Wassersportgerät nach einem der vorherigen Ansprüche, **dadurch gekennzeichnet, dass** die Haltevorrichtung (8) einen weiteren Lenker (10) aufweist, der einenends schwenkbar am oder im Schwimmkörper (4) gelagert ist und anderenends schwenkbar an der Tragflächenvorrichtung (6) angeordnet ist.

13. Wassersportgerät nach Anspruch 12, **dadurch gekennzeichnet, dass** die Haltevorrichtung (8) einen Antrieb (12) aufweist, der vorzugsweise als elektro-mechanisch oder elektro-pneumatischer Antrieb (12) ausgebildet ist, über den die Tragflächenvorrichtung (6) aus einer Ruhe- und/oder Startposition in die Betriebsstellung und/oder aus der Betriebsstellung in die Ruhe- und/oder Startposition überführbar, insbesondere ein- und ausfahrbar und/oder klappbar, ist.

14. Wassersportgerät nach einem der vorherigen Anspruch, **dadurch gekennzeichnet, dass** der Antrieb (12) einen Energiespeicher, insbesondere zur Speicherung mechanischer Energie, aufweist, insbesondere wobei der der zumindest eine Feder aufweisende Energiespeicher mittels eines Antriebsmotors vorzugsweise in zwei gegensinnige Richtungen vorspannbar ist.

15. Wassersportgerät nach einem der vorherigen Ansprüche, **dadurch gekennzeichnet, dass** zumindest ein Teil der Vortriebsvorrichtung (50) lösbar an einer Aufnahme (62) der Tragflächenvorrichtung (6) festgelegt ist.

16. Wassersportgerät nach einem der vorherigen Ansprüche, **gekennzeichnet durch** einen Vortriebsenergiespeicher der Vortriebsvorrichtung (50) sowie einen Speichersensor zur Überwachung des Vortriebsenergiespeichers, wobei das Wassersportgerät zur Reduzierung der Leistung oder Abschaltung der Vortriebsvorrichtung (50) aufgrund des Signals des Speichersensors ausgebildet ist.

17. Wassersportgerät nach einem der vorherigen Ansprüche, **dadurch gekennzeichnet, dass** die Vortriebsvorrichtung sowohl in der Ruhe- und/oder Startposition als auch in der Betriebsstellung betreibbar ist.

18. Wassersportgerät nach einem der vorherigen Ansprüche, **dadurch gekennzeichnet, dass** das Wassersportgerät wenigstens einen Sensor, vorzugsweise eine Mehrzahl von Sensoren aus einer Gruppe umfassend Gyrosensoren, Geschwindigkeitssensoren, Positionssensoren (GPS, Glonass, Beidou etc.), Abstandssensoren (Echolot, Sonar) Infrarotsensoren und Neigungssensoren aufweist.

19. Wassersportgerät nach einem der vorherigen Ansprüche, **dadurch gekennzeichnet, dass** die Vortriebsvorrichtung (50) zur insbesondere automatischen Schubsteuerung, weiter insbesondere zur automatischen Schubvektorsteuerung, ausgebildet ist und die Steuereinheit (70) des Wassersportgeräts (2) hierzu ausgebildet ist.

20. Wassersportgerät nach einem der vorherigen Ansprüche, **gekennzeichnet durch** wenigstens einen Fahrtzustandssensor (32) zur Bestimmung des Abstands des Schwimmkörpers (4) und/oder der Tragflächenvorrichtung (6) von der Wasseroberfläche (34), insbesondere wobei der Fahrtzustandssensor einlaminiert ist.

21. Wassersportgerät nach einem der vorherigen Ansprüche, **gekennzeichnet durch** eine optische Anzeigeeinheit (31), die sich insbesondere zumindest über eine Hälfte der Länge der Oberseite des Schwimmkörpers (4) erstreckt und die insbesondere zur Anzeige des Abstands des Schwimmkörpers (4) von der Wasseroberfläche (34) und/oder zur Anzeige eines zulässigen Bereichs (82) ausgebildet ist.

## Claims

1. A water sports device having a floating body (4) in the form of a swimming board and a propulsion device (50) provided for propelling the water sports device, with a control unit and at least one sensor arrangement (74) that can be used for the position determination, comprising the geographical position,
**characterized in that**
the water sports device (2) designed as a foil board is designed with the control unit (70) for generating control signals based on signals from the sensor arrangement (74) for the purpose of geofencing and homing in such a way that the control unit is designed to generate control signals for the automated heading to a deployment site of the water sports device.

2. The water sports device as claimed in claim 1, **characterized in that** the position determination comprises the distance above ground.

3. The water sports device as claimed in claim 1 or 2, **characterized in that** the position determination comprises the determination of the geographical position comprising the degree of longitude and latitude.

4. The water sports device as claimed in one of the preceding claims, **characterized in that** the sensor arrangement (74) and/or the control unit (70) is designed to determine the distance to a deployment site (78).

5. The water sports device as claimed in one of the preceding claims, **characterized in that** the sensor arrangement (74) is designed to determine the absolute or relative speed of the water sports device.

6. The water sports device as claimed in one of the preceding claims, **characterized in that** the control unit (70) has means for comparing the position with an internally or externally predefined map for the purpose of generating control signals.

7. The water sports device as claimed in one of the preceding claims, **characterized by** an external monitoring device (80) which is designed to transmit control signals generated on the basis of the position of the water sports device (2) to the control unit (70).

8. The water sports device as claimed in one of the preceding claims, **characterized in that** the control unit (70) is designed for communication with a control unit (70) of a further propulsion device of the same or of a further water sports device and in particular for generating control signals for one or both propulsion devices (50) on the basis of the position, control and/or driving signals/data transmitted by the further water sports device.

9. The water sports device as claimed in one of the preceding claims with two propulsion devices (50), **characterized by** a person area (84) present between the two propulsion devices (50) in a top view.

10. The water sports device as claimed in one of the preceding claims, **characterized by** a hydrofoil device (6) which is fastened to the floating body (4) by means of a holding device (8), wherein the hydrofoil device (6) which is arranged on a link (10) of the holding device (8) has at least one, preferably at least two hydrofoils (16), and wherein, in the operating position and during a forward movement, owing to buoyancy brought about by the hydrofoil device (6), the floating body can be transferred into a position spaced apart from a water surface.

11. The water sports device as claimed in claim 10, **characterized in that** the water sports device (2) is designed for transferring the hydrofoil device (6) from the operating position below the floating body (4) into a rest and/or starting position close to the floating body or at least partially in the latter on the basis of the position of the water sports device.

12. The water sports device as claimed in one of the preceding claims, **characterized in that** the holding device (8) has a further link (10) which is pivotably mounted on or in the floating body (4) at one end and pivotably arranged on the hydrofoil device (6) at the other end.

13. The water sports device as claimed in claim 12, **characterized in that** the holding device (8) has a drive (12) which is preferably designed as an electro-mechanical or electro-pneumatic drive (12) via which the hydrofoil device (6) is transferable from a rest and/or starting position into the operating position and/or from the operating position into the rest and/or starting position, in particular is retractable and extendable and/or foldable.

14. The water sports device as claimed in one of the preceding claims, **characterized in that** the drive (12) has an energy store, in particular for storing mechanical energy, in particular wherein the energy store having at least one spring can be preloaded by means of a drive motor, preferably in two opposite directions.

15. The water sports device as claimed in one of the preceding claims, **characterized in that** at least part of the propulsion device (50) is detachably fixed to a receptacle (62) of the hydrofoil device (6).

16. The water sports device as claimed in one of the preceding claims, **characterized by** a propulsion energy store of the propulsion device (50) and by a storage sensor for monitoring the propulsion energy store, wherein the water sports device is designed to reduce the power or to switch off the propulsion device (50) on the basis of the signal from the storage sensor.

17. The water sports device as claimed in one of the preceding claims, **characterized in that** the propulsion device is operable both in the rest and/or starting position and in the operating position.

18. The water sports device as claimed in one of the preceding claims, **characterized in that** the water sports device has at least one sensor, preferably a plurality of sensors from a group comprising gyro sensors, speed sensors, position sensors (GPS, Glonass, Beidou, etc.), distance sensors (echo sounder, sonar), infrared sensors, and inclination sensors.

19. The water sports device as claimed in one of the preceding claims, **characterized in that** the propulsion device (50) is designed for in particular automatic thrust control, further in particular for automatic thrust vector control, and the control unit (70) of the water sports device (2) is designed for this purpose.

20. The water sports device as claimed in one of the preceding claims, **characterized by** at least one motion status sensor (32) for determining the distance of the floating body (4) and/or of the hydrofoil device (6) from the water surface (34), in particular wherein the motion status sensor is laminated into place.

21. The water sports device as claimed in one of the preceding claims, **characterized by** an optical display unit (31) which extends in particular over at least half of the length of the upper side of the floating body (4) and which is designed in particular to display the distance of the floating body (4) from the water surface (34) and/or to display a permissible region (82).

## Revendications

1. Équipement pour sports nautiques comprenant un corps flottant (4) sous la forme d'une planche flottante et un dispositif de propulsion (50) prévu pour la propulsion de l'équipement pour sports nautiques, doté d'une unité de commande et d'au moins un agencement de capteurs (74) utilisable pour la détermination de position, y compris la position géographique,
**caractérisé en ce que**
l'équipement pour sports nautiques (2) sous forme de planche de foil est conçu avec l'unité de commande (70) pour la génération de signaux de commande sur la base de signaux provenant de l'agencement de capteurs (74) à des fins de géorepérage et d'autoguidage de sorte que l'unité de commande est conçue pour générer des signaux de commande pour la commande automatisée d'un site de déploiement de l'équipement pour sports nautiques.

2. Équipement pour sports nautiques selon la revendication 1, **caractérisé en ce que** la détermination de position comprend la distance au sol.

3. Équipement pour sports nautiques selon la revendication 1 ou 2, **caractérisé en ce que** la détermination de position comprend la détermination de la position géographique, y compris la longitude et la latitude.

4. Équipement pour sports nautiques selon l'une des revendications précédentes, **caractérisé en ce que** l'agencement de capteurs (74) et/ou l'unité de commande (70) sont conçus pour la détermination de la distance par rapport à un site de déploiement (78).

5. Équipement pour sports nautiques selon l'une des revendications précédentes, **caractérisé en ce que** l'agencement de capteurs (74) est conçu pour la détermination de la vitesse absolue ou relative de l'équipement pour sports nautiques.

6. Équipement pour sports nautiques selon l'une des revendications précédentes, **caractérisé en ce que** l'unité de commande (70) comporte des moyens pour la comparaison de la position avec une carte prédéterminée en interne ou en externe à des fins de création de signaux de commande.

7. Équipement pour sports nautiques selon l'une des revendications précédentes, **caractérisé par** un dispositif de contrôle externe (80) qui est conçu pour la transmission de signaux de commande générés sur la base de la position de l'équipement pour sports nautiques (2) à l'unité de commande (70).

8. Équipement pour sports nautiques selon l'une des revendications précédentes, **caractérisé en ce que** l'unité de commande (70) est conçue pour la communication avec une unité de commande (70) d'un dispositif de propulsion supplémentaire du même appareil de sport nautique ou d'un appareil de sport nautique supplémentaire et est notamment conçue pour générer des signaux de commande pour l'un ou les deux dispositifs de propulsion (50) sur la base des signaux/données de position, de commande et/ou de déplacement communiqués par l'appareil de sport nautique supplémentaire.

9. Équipement pour sports nautiques selon l'une des revendications précédentes, comprenant deux dispositifs de propulsion (50), **caractérisé par** une zone pour personnes (84) présente en vue de dessus entre les deux dispositifs de propulsion (50).

10. Équipement pour sports nautiques selon l'une des revendications précédentes, **caractérisé par** un dispositif à surface portante (6) qui est fixé au corps flottant (4) au moyen d'un dispositif de maintien (8), le dispositif à surface portante (6) disposé sur un bras de liaison (10) du dispositif de maintien (8) présentant au moins une, de préférence au moins deux surfaces portantes (16), et le corps flottant pouvant être amené à passer en position de fonctionnement et pendant un mouvement vers l'avant dans une position à distance d'une surface de l'eau en raison d'une portance générée par le dispositif à surface portante (6).

11. Équipement pour sports nautiques selon la revendication 10, **caractérisé en ce que** l'équipement pour sports nautiques (2) est conçu pour faire passer le dispositif à surface portante (6) de la position de fonctionnement sous le corps flottant (4) à une position de repos et/ou de départ proche du corps flottant ou au moins partiellement dans celui-ci sur la base de la position de l'équipement pour sports nautiques.

12. Équipement pour sports nautiques selon l'une des revendications précédentes, **caractérisé en ce que** le dispositif de maintien (8) présente un bras de liaison (10) supplémentaire, qui est monté pivotant à une extrémité sur ou dans le corps flottant (4) et est disposé pivotant à l'autre extrémité sur le dispositif à surface portante (6).

13. Équipement pour sports nautiques selon la revendication 12, **caractérisé en ce que** le dispositif de maintien (8) un comporte entraînement (12) qui est de préférence conçu sous forme d'entraînement électromécanique ou électro-pneumatique (12), au moyen duquel le dispositif de surface portante (6) peut être amené à passer, en particulier rentré et sorti et/ou replié, d'une position de repos et/ou de départ à la position de fonctionnement et/ou de la position de fonctionnement à la position de repos et/ou de départ.

14. Équipement pour sports nautiques selon l'une des revendications précédentes, **caractérisé en ce que** l'entraînement (12) comporte un accumulateur d'énergie, en particulier pour le stockage d'énergie mécanique, l'accumulateur d'énergie comportant en particulier au moins un ressort pouvant être précontraint de préférence dans deux directions opposées au moyen d'un moteur d'entraînement.

15. Équipement pour sports nautiques selon l'une des revendications précédentes, **caractérisé en ce qu'**au moins une partie du dispositif de propulsion (50) est fixée de manière amovible à un logement (62) du dispositif à surface portante (6).

16. Équipement pour sports nautiques selon l'une des revendications précédentes, **caractérisé par** un accumulateur d'énergie de propulsion du dispositif de propulsion (50) ainsi qu'un capteur de stockage destiné à surveiller l'accumulateur d'énergie de propulsion, l'équipement pour sports nautiques étant conçu pour réduire la puissance ou désactiver le dispositif de propulsion (50) au moyen de l'unité de commande sur la base du signal du capteur de stockage.

17. Équipement pour sports nautiques selon l'une des revendications précédentes, **caractérisé en ce que** le dispositif de propulsion peut être mis en œuvre aussi bien dans la position de repos et/ou de départ que dans la position de fonctionnement.

18. Équipement pour sports nautiques selon l'une des revendications précédentes, **caractérisé en ce que** l'équipement pour sports nautiques comporte au moins un capteur, de préférence une pluralité de capteurs d'un groupe comprenant des capteurs gyroscopiques, des capteurs de vitesse, des capteurs de position (GPS, Glonass, Beidou, etc.), des capteurs de distance (échosondeur, sonar), des capteurs infrarouges et des capteurs d'inclinaison.

19. Équipement pour sports nautiques selon l'une des revendications précédentes, **caractérisé en ce que** le dispositif de propulsion (50) est conçu pour la commande de poussée, en particulier automatique, plus particulièrement pour la commande automatique du vecteur de poussée, et l'unité de commande (70) de l'équipement pour sports nautiques (2) est conçue à cet effet.

20. Équipement pour sports nautiques selon l'une des revendications précédentes, **caractérisé par** au moins un capteur d'état de navigation (32) pour la détermination de la distance du corps flottant (4) et/ou du dispositif à surface portante (6) par rapport à la surface de l'eau (34), le capteur d'état de navigation étant en particulier laminé.

21. Équipement pour sports nautiques selon l'une des revendications précédentes, **caractérisé par** une unité d'affichage optique (31) qui s'étend en particulier sur au moins la moitié de la longueur de la partie supérieure du corps flottant (4) et qui est en particulier conçue pour l'affichage de la distance du corps flottant (4) par rapport à la surface de l'eau (34) et/ou pour l'affichage d'une zone admissible (82).
